# EUROPÄISCHE PATENTSCHRIFT

(11) **EP 3 380 668 B1**
(45) Veröffentlichungstag und Bekanntmachung des Hinweises auf die Patenterteilung: **28.08.2019**
(21) Anmeldenummer: 16778852.0
(22) Anmeldetag: 11.10.2016
(51) Int. Cl.: D21D 1/30

(54) **MAHLANORDNUNG**
REFINING APPARATUS
DISPOSITIF DE RAFFINAGE

(30) Priorität: 23.11.2015 DE 102015223027
(43) Veröffentlichungstag der Anmeldung: 03.10.2018
(73) Patentinhaber: Voith Patent GmbH, 89522 Heidenheim (DE)
(72) Erfinder: GOTTSCHALK, Gert, 88212 Ravensburg (DE)
(86) Internationale Anmeldenummer: PCT/EP2016/074303
(87) Internationale Veröffentlichungsnummer: WO 2017/089022

(56) Entgegenhaltungen:
- DE-A1-102008 059 610
- US-A- 3 372 879

## Beschreibung

Die Erfindung betrifft eine Mahlanordnung zur Mahlung von wässrig suspendierten Zellstofffasern gemäß dem Oberbegriff des Anspruchs 1.

Es ist seit langem bekannt, Zellstofffasern, d.h. Frischzellstoff und/oder Altpapierfasern zu mahlen, um bei der daraus hergestellten Faserstoffbahn die gewünschten Eigenschaften, insbesondere hinsichtlich Festigkeit, Formation und Oberfläche erreichen zu können.

Bei den dabei zum Einsatz kommenden Refinern werden die Mahlflächen wegen des relativ schnellen Verschleißes von auswechselbaren, mit der entsprechenden Stützfläche verschraubten Mahlgarnituren gebildet.

Für das Erreichen der gewünschten Fasereigenschaften, insbesondere den Mahlgrad müssen die Mahlgarnituren dem zu behandelnden Faserstoff bestmöglich angepasst werden, auch um einen übermäßigen Verschleiß der Garnituren zu verhindern.

Außerdem wird zur Effizienzsteigerung der Faserbehandlung eine optimale Nutzung der verfügbaren Mahlfläche angestrebt. Hierzu ist es aus der US 3 372 879 A bekannt, Mahlleisten mit Erhebungen und Vertiefungen vorzusehen. Darüber hinaus werden in der DE 10 2008 059610 A1 Nuten mit Barrieren vorgeschlagen.

Die Aufgabe der Erfindung ist es daher die Effizienz der Faserbehandlung zu verbessern.

Erfindungsgemäß wurde die Aufgabe durch die Merkmale des Anspruchs 1 gelöst.

Dadurch dass die Mahlleisten konzentrisch zur Rotationsachse der Mahlflächen angeordnete, ringförmige Erhebungen und Vertiefungen aufweisen, wobei eine ringförmige Erhebung einer Mahlfläche in eine ringförmige Vertiefung der gegenüberliegenden Mahlfläche hinragt, wird ein Wechsel eines Teils der Zellstofffasern von einer Mahlfläche zur gegenüberliegenden Mahlfläche erzwungen, was die Intensität der Behandlung wesentlich erhöht. Um die Intensität in radialer Richtung aufrechtzuerhalten, ist der Abstand zwischen den Mahlleisten der gegenüberliegenden Mahlflächen entlang der radialer Richtung gleichgroß, und zur Vermeidung von Verstopfungen ist der Abstand zwischen den Nuten der gegenüberliegenden Mahlflächen entlang der radialer Richtung gleichgroß.

Zur Minimierung des Verschleißes sollte die Höhe der ringförmigen Erhebungen bzw. Vertiefungen in radialer Richtung allmählich zunehmen und/oder allmählich abnehmen.

Die Höhe der Erhebungen bzw. Vertiefungen der Mahlleisten sowie der Nuten bezieht sich in dieser Beschreibung auf die jeweilige Stützfläche für die, die Mahlfläche bildenden Mahlgarnituren. Je nach Art der Mahlmaschine sind diese Stützflächen zur Befestigung der Mahlgarnituren eben oder kegelförmig.

Um beide Mahlflächen optimal zu nutzen, sollten sich bei beiden Mahlflächen jeweils Erhebungen und Vertiefungen in radialer Richtung abwechseln.

Je nach Art des Faserstoffs sowie der Anforderungen an dessen Behandlung kann es genügen, wenn sich Erhebungen und Vertiefungen nur über einen radialen Teilabschnitt der Mahlfläche erstrecken.

Eine umfassende Nutzung der Vorteile der Erfindung ergibt sich jedoch, wenn sich Erhebungen und Vertiefungen über die gesamte Mahlfläche erstrecken.

Außerdem kann die Durchströmung des Mahlspalts noch dadurch behindert werden, dass zumindest einige Nuten von Barrieren wenigstens teilweise verschlossen sind. Auch dies intensiviert die Faserbehandlung.

Im Ergebnis lassen sich so erhebliche Energieeinsparungen erreichen.

Nachfolgend soll die Erfindung an mehreren Ausführungsbeispielen näher erläutert werden.

In der beigefügten Zeichnung zeigt:
Figur 1: einen schematischen Querschnitt durch eine Mahlanordnung;
Figur 2: die Draufsicht auf eine Mahlplatte 14,15 und
Figur 3-6: einen radialen Teilquerschnitt durch verschiedene Mahlplatten 14, 15.

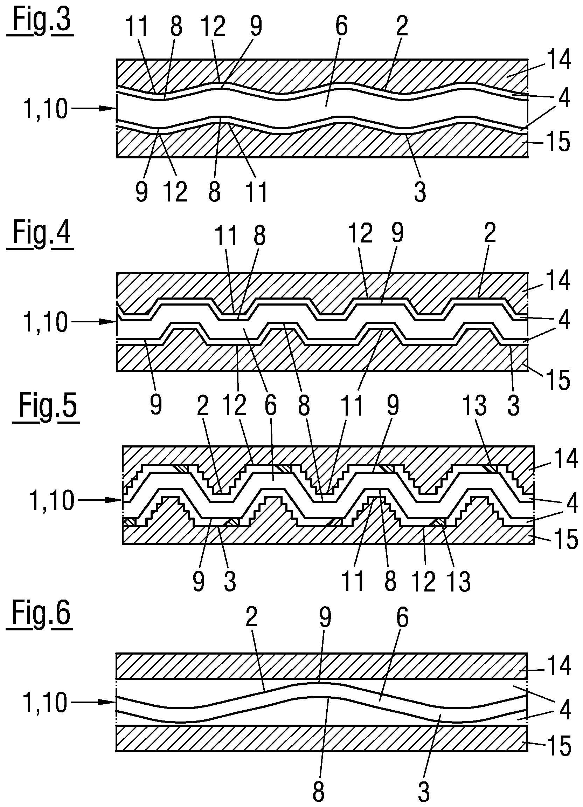

Die Ausführungsbeispiele nach den Figuren 3-5 fallen nicht unter die Ansprüche.

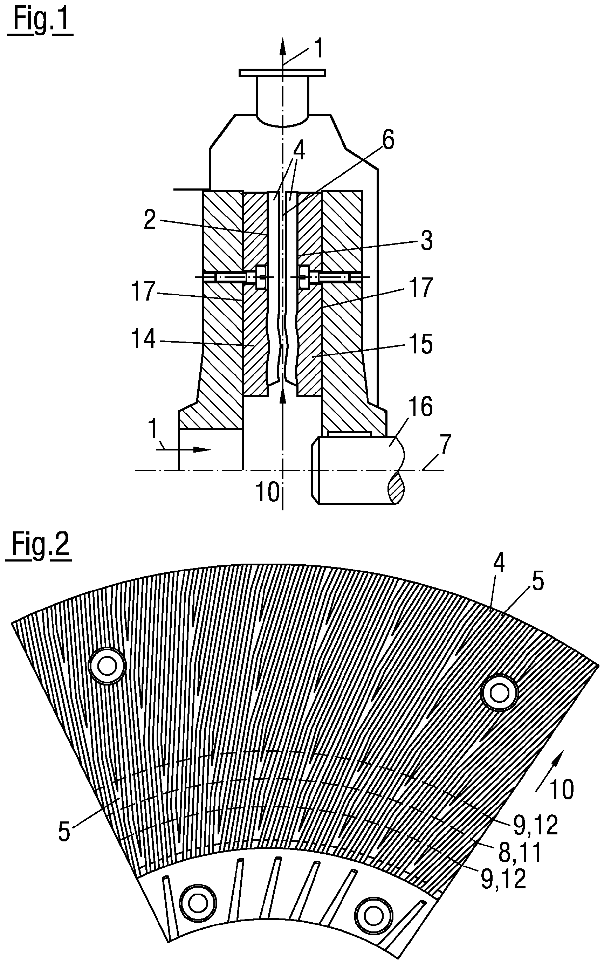

Im Gehäuse der Mahlanordnung wird gemäß Figur 1 ein Mahlspalt 6 von einer feststehenden und mit dem Gehäuse gekoppelten Mahlfläche 2 und einer um eine Rotationsachse 7 rotierenden Mahlfläche 3 gebildet.

Dabei verlaufen die beiden kreisringförmigen Mahlflächen 2,3 parallel zueinander, wobei der Abstand zwischen diesen meist einstellbar ist.

Die rotierende Mahlfläche 3 wird hier von einer im Gehäuse rotierbar gelagerten Welle 16 in Rotationsrichtung bewegt. Angetrieben wird diese Welle 16 von einem ebenfalls im Gehäuse vorhandenen Antrieb.

Die zu mahlende, die Zellstofffasern 1 enthaltende Fasersuspension gelangt bei dem hier gezeigten Beispiel über einen Zulauf durch das Zentrum in den Mahlspalt 6 zwischen den beiden Mahlflächen 2,3.

Die Fasersuspension passiert die zusammenwirkenden Mahlflächen 2,3 radial nach außen und verlässt den sich anschließenden Ringraum durch einen Ablauf.

Nicht dargestellt sind die an sich bekannten Mittel, mit denen eine Kraft erzeugt wird, um die beiden Mahlflächen 2,3 gegeneinander zu drücken.

Beide Mahlflächen 2,3 werden jeweils von mehreren Mahlplatten 14,15, wie in Figur 2 dargestellt, gebildet, die sich über jeweils ein Umfangsegment der entsprechenden Mahlfläche 2,3 erstrecken und auch als Mahlgarnituren bezeichnet werden.

In Umfangsrichtung nebeneinander gereiht ergeben die Mahlplatten 14,15 eine durchgehende Mahlfläche 2,3. Befestigt sind die Mahlplatten 14,15 jeweils auf einer ebenen Stützfläche 17.

Die Mahlplatten 14,15 und damit auch die Mahlflächen 2,3 werden, wie in Figur 2 dargestellt, von einer Vielzahl von im Wesentlichen radial verlaufenden Mahlleisten 4 und dazwischenliegenden Nuten 5 gebildet.

Der Querschnitt der Mahlleisten 4, auch Messer genannt, ist im Allgemeinen rechteckig, wobei es aber auch andere Formen gibt.

Die zwischen den Mahlleisten 4 verlaufenden Nuten 5 haben ebenfalls einen rechteckigen Querschnitt und dienen als Strömungskanäle für die Fasersuspension. Die Nuttiefe beträgt meist zwischen 2 und 20 mm.

Um die Nutbreite bei konstanter und gleicher Breite der Mahlleisten 4 radial nach außen nicht zu groß werden zu lassen, können sich in radialer Richtung 10 Mahlleisten 4 teilen oder neu hinzukommen.

Erfindungswesentlich ist, dass die Mahlleisten 4 konzentrisch zur Rotationsachse 7 der Mahlflächen 2,3 angeordnete, ringförmige Erhebungen 8 und Vertiefungen 9 aufweisen, wobei eine ringförmige Erhebung 8 einer Mahlfläche 2,3 in eine ringförmige Vertiefung 9 der gegenüberliegenden Mahlfläche 3,2 hineinragt.

Über die Erhebungen 8 und Vertiefungen 9 werden Turbulenzen in der zu behandelnden Faserstoffsuspension erzeugt. Außerdem wird die Faserstoffsuspension beim Durchströmen des Mahlspalts 6 zumindest teilweise zum Wechsel zwischen den Mahlflächen 2,3 gezwungen.

Im Ergebnis steigt die Effizienz der Mahlung erheblich.

Hierzu zeigen die Figuren 3 bis 6 verschiedene Ausgestaltungen der Mahlflächen 2,3. Unabhängig von deren Gestaltung ist jedoch der Abstand zwischen den Mahlleisten 4 der gegenüberliegenden Mahlflächen 2,3 sowie der Abstand zwischen den Nuten 5 der gegenüberliegenden Mahlflächen 2,3 in radialer Richtung 10 gleichgroß.

Bei Figur 6 haben die Nuten 5 in radialer Richtung 10 eine konstante Höhe über der Stützfläche 17. Dies bedeutet, dass sich die Höhe der Mahlleisten 4 bezogen auf den Nutgrund in radialer Richtung 10 ändert.

Im Unterschied hierzu wirken bei den in Figur 3 bis 5 gezeigten Beispielen die Nuten 5 bei der Verwirbelung mit. Dies bedeutet, dass auch die Nuten 5 konzentrisch zur Rotationsachse 7 der Mahlflächen 2,3 angeordnete, ringförmige Erhebungen 11 und Vertiefungen 12 aufweisen, wobei sich eine ringförmige Erhebung 11 einer Mahlfläche 2,3 gegenüber einer ringförmigen Vertiefung 12 der gegenüberliegenden Mahlfläche 3,2 befindet.

Um hierbei Verstopfungen durch Engstellen zu vermeiden, stimmt die radiale Lage der Erhebungen 8 bzw. Vertiefungen 9 der Mahlleisten 4 mit der radialen Lage der Erhebungen 11 bzw. Vertiefungen 12 der Nuten 5 einer Mahlfläche 2,3 überein.

Bei den Figuren 3 bis 5 ist die Höhe der Mahlleisten 4 über dem Nutgrund in radialer Richtung betrachtet gleichgroß.

Es ist beispielsweise aber auch möglich, dass die Höhe der Nuten 5 bezogen auf die Stützfläche 17 in radialer Richtung 10 weniger stark schwankt als die Höhe der Mahlleisten 4 bezüglich der Stützfläche 17.

Im Interesse einer homogenen Behandlung während der Durchströmung wechseln sich bei allen Ausführungen und bei beiden Mahlflächen 2,3 jeweils Erhebungen 8,11 und Vertiefungen 9,12 in radialer Richtung 10 ab.

In Abhängigkeit von den zu behandelnden Zellstofffasern 1 sowie den Anforderungen an deren Behandlung sind die Mahlflächen 2,3 entsprechend zu gestalten.

So zeigt Figur 3 eine Ausführung, bei der die Höhe der ringförmigen Erhebung 8,11 bzw. Vertiefung 9,12 in radialer Richtung 10 bei beiden Mahlflächen 2,3 sowie bei Mahlleisten 4 und Nuten 5 allmählich zunimmt und allmählich abnimmt.

Bei Figur 6 verändert sich nur die Höhe der Mahlleisten 4 bezüglich der Stützfläche 17 allmählich.

Um den Grad an Verwirbelung weiter zu steigern, nimmt bei Figur 4 und 5 die Höhe der ringförmigen Erhebung 8,11 bzw. Vertiefung 9,12 in radialer Richtung 10 in einer (Figur 4) oder mehreren (Figur 5) Stufen zu und in einer oder mehreren Stufen ab. Bei mehreren Stufen können die Übergänge, wie bei Figur 5 dargestellt, senkrecht zur Durchströmungsrichtung verlaufen.

Bei nur einer Stufe zwischen Erhebung 8,11 und Vertiefung 9,12 ist zur Minimierung des Verschleißes ein geneigter Übergang gemäß Figur 4 zu empfehlen.

Im Allgemeinen erstrecken sich die Erhebungen 8,11 und Vertiefungen 9,12 über die gesamte Mahlfläche 2,3.

Oft kann es aber auch, wie in Figur 1 und 2 zu sehen, ausreichen, wenn sich die Erhebungen 8,11 und Vertiefungen 9,12 nur über einen radialen Teilabschnitt der Mahlfläche 2,3 erstrecken.

Zusätzlich können auch Barrieren 13, gemäß Figur 5, die Faserbehandlung intensivieren.

Diese Barrieren 13 verschließen die Nuten 5 ganz oder teilweise und können so auch den Wechsel der Faserstoffsuspension zwischen den Mahlflächen 2,3 unterstützen.

## Patentansprüche

1. Mahlanordnung zur Mahlung von wässrig suspendierten Zellstofffasern (1) zwischen zwei, einen Mahlspalt (6) bildenden, relativ zueinander rotierenden und koaxial zueinander angeordneten Mahlflächen (2,3), die von Mahlleisten (4) und dazwischen verlaufenden Nuten (5) gebildet werden, wobei sich die Mahlleisten (4) zumindest mit der wesentlichen Richtungskomponente radial bezüglich der Rotationsachse (7) erstrecken, die Mahlleisten (4) konzentrisch zur Rotationsachse (7) der Mahlflächen (2,3) angeordnete, ringförmige Erhebungen (8) und Vertiefungen (9) aufweisen, eine ringförmige Erhebung (8) einer Mahlfläche (2,3) in eine ringförmige Vertiefung (9) der gegenüberliegenden Mahlfläche (3,2) hineinragt und die, die Mahlfläche bildenden Mahlgarnituren auf einer Stützfläche (17) befestigt sind, **dadurch gekennzeichnet, dass** der Abstand zwischen den Mahlleisten (4) der gegenüberliegenden Mahlflächen (2, 3) in radialer Richtung (10) gleichgroß ist, der Abstand zwischen den Nuten (5) der gegenüberliegenden Mahlflächen (2,3) in radialer Richtung (10) gleichgroß ist und die Nuten (5) in radialer Richtung (10) eine konstante Höhe über der Stützfläche (17) haben.

2. Mahlanordnung nach einem der vorhergehenden Ansprüche, **dadurch gekennzeichnet, dass** die Höhe der ringförmigen Erhebung (8,11) bzw. Vertiefung (9,12) in radialer Richtung (10) allmählich zunimmt und/oder allmählich abnimmt.

3. Mahlanordnung nach einem der vorhergehenden Ansprüche, **dadurch gekennzeichnet, dass** sich bei beiden Mahlflächen (2,3) jeweils Erhebungen (8,11) und Vertiefungen (9,12) in radialer Richtung (10) abwechseln.

4. Mahlanordnung nach einem der vorhergehenden Ansprüche, **dadurch gekennzeichnet, dass** sich Erhebungen (8,11) und Vertiefungen (9,12) nur über einen radialen Teilabschnitt der Mahlfläche (2,3) erstrecken.

5. Mahlanordnung nach einem der Ansprüche 1 bis 4, **dadurch gekennzeichnet, dass** sich Erhebungen (8,11) und Vertiefungen (9,12) über die gesamte Mahlfläche (2,3) erstrecken.

6. Mahlanordnung nach einem der vorhergehenden Ansprüche, **dadurch gekennzeichnet, dass** zumindest einige Nuten (5) von Barrieren (13) wenigstens teilweise verschlossen sind.

## Claims

1. Refining assembly for grinding aqueously suspended cellulosic fibres (1) between two grinding faces (2, 3) which form a grinding gap (6) and rotate relative to one another and are disposed so as to be mutually coaxial and which are formed by grinding strips (4) and grooves (5) running therebetween, wherein the grinding strips (4) at least by way of the substantial directional component extend so as to be radial in relation to the rotation axis (7); the grinding strips (4) have annular elevations (8) and depressions (9) that are disposed so as to be concentric with the rotation axis (7) of the grinding faces (2, 3); an annular elevation (8) of one grinding face (2, 3) protrudes into an annular depression (9) of the opposite grinding face (3, 2), and the grinding sets that form the grinding face are fastened on a support face (17), **characterized in that** the spacing between the grinding strips (4) of the opposite grinding faces (2, 3) in the radial direction (10) is identical, the spacing between the grooves (5) of the opposite grinding faces (2, 3) in the radial direction (10) is identical, and the grooves (5) in the radial direction (10) have a consistent height above the support face (17).

2. Refining assembly according to one of the preceding claims, **characterized in that** the height of the annular elevation (8, 11), or depression (9, 12), respectively, gradually increases and/or gradually decreases in the radial direction (10).

3. Refining assembly according to one of the preceding claims, **characterized in that** in the case of both grinding faces (2, 3) elevations (8, 11) and depressions (9, 12) mutually alternate in each case in the radial direction (10).

4. Refining assembly according to one of the preceding claims, **characterized in that** elevations (8, 11) and depressions (9, 12) extend only across a radial sub-portion of the grinding face (2, 3).

5. Refining assembly according to one of Claims 1 to 4, **characterized in that** elevations (8, 11) and depressions (9, 12) extend across the entire grinding face (2, 3).

6. Refining assembly according to one of the preceding claims, **characterized in that** at least some of the grooves (5) are at least partially closed by barriers (13).

## Revendications

1. Dispositif de raffinage pour le broyage de fibres cellulosiques (1) en suspension aqueuse entre deux faces de broyage (2, 3) formant une fente de broyage (6), tournant l'une par rapport à l'autre et disposées de façon coaxiale l'une à l'autre, qui sont formées par des barres de broyage (4) et des rainures (5) s'étendant entre celles-ci, dans lequel les barres de broyage (4) s'étendent au moins avec la composante directionnelle essentielle radialement par rapport à l'axe de rotation (7), les barres de broyage (4) présentent des crêtes (8) et des vallées (9) annulaires, disposées de façon concentrique à l'axe de rotation (7) des faces de broyage (2, 3), une crête annulaire (8) d'une face de broyage (2, 3) pénètre dans une vallée annulaire (9) de la face de broyage opposée (3, 2) et les garnitures de broyage formant la face de broyage sont fixées sur une face de support (17), **caractérisé en ce que** la distance entre les barres de broyage (4) des faces de broyage opposées (2, 3) en direction radiale (10) est constante, la distance entre les rainures (5) des faces de broyage opposées (2, 3) est constante dans la direction radiale (10) et les rainures (5) ont en direction radiale (10) une hauteur constante au-dessus de la face de support (17).

2. Dispositif de raffinage selon la revendication précédente, **caractérisé en ce que** la hauteur de la crête (8, 11) ou de la vallée (9, 12) annulaire augmente progressivement ou diminue progressivement en direction radiale (10).

3. Dispositif de raffinage selon l'une quelconque des revendications précédentes, **caractérisé en ce que** des crêtes (8, 11) et des vallées (9, 12) alternent en direction radiale (10) chaque fois dans les deux faces de broyage (2, 3).

4. Dispositif de raffinage selon l'une quelconque des revendications précédentes, **caractérisé en ce que** des crêtes (8, 11) et des vallées (9, 12) ne s'étendent que sur une région radiale partielle de la face de broyage (2, 3).

5. Dispositif de raffinage selon l'une quelconque des revendications 1 à 4, **caractérisé en ce que** des crêtes (8, 11) et des vallées (9, 12) s'étendent sur toute la face de broyage (2, 3).

6. Dispositif de raffinage selon l'une quelconque des revendications précédentes, **caractérisé en ce qu'**au moins quelques rainures (5) sont fermées au moins en partie par des barrières (13).
